# EUROPEAN PATENT APPLICATION

(11) **EP 1 445 931 A2**
(43) Date of publication of application: **11.08.2004**
(21) Application number: 04002554.6
(22) Date of filing: 05.02.2004
(51) Int. Cl.: H04N 1/00, H04N 1/32

(54) **Data transfer method**

(30) Priority: 07.02.2003 JP 2003031315
(71) Applicant: CANON KABUSHIKI KAISHA, Tokyo (JP)
(72) Inventor: Furukawa, Hitoshi, Tokyo (JP)
(74) Representative: Leson, Thomas Johannes Alois, Dipl.-Ing.

(57) **Abstract**

In an image forming apparatus which includes a nonvolatile memory and is constituted by an engine section which forms an image and a controller section which transmits image data to the engine section through a video interface, synchronization of data transfer is established by a predetermined control signal that controls serial communication when data should be transferred from the controller section to the engine section to rewrite the nonvolatile memory, and the nonvolatile memory is rewritten by the data transferred in synchronism.

## Description

### FIELD OF THE INVENTION

The present invention relates to a technique for transferring data by serial communication and rewriting data stored in a nonvolatile memory by the transferred data.

### BACKGROUND OF THE INVENTION

In recent years, flash ROMs as a kind of nonvolatile memories are becoming popular and replacing ROMs (Read Only Memories) and EPROMs (Electrical Programmable Read Only Memories) as recording media. A flash ROM is a nonvolatile memory that is electrically erasable and writable. Unlike a ROM or EPROM, the flash ROM can rewrite data without exchanging elements. To rewrite data, a method of rewriting a flash ROM by connecting a flash writer or a method of rewriting data by using a dedicated rewrite program is generally used.

The rewrite method using a dedicated flash ROM rewrite program will be described by using a normal printing apparatus as an example. A normal printing apparatus is constituted by a video controller that converts image information into bitmap data and a printer engine that forms an image on the basis of the pixel data and transfers and fixes the image on a printing medium. An example of the interface between the video controller and the printer engine will be described below.

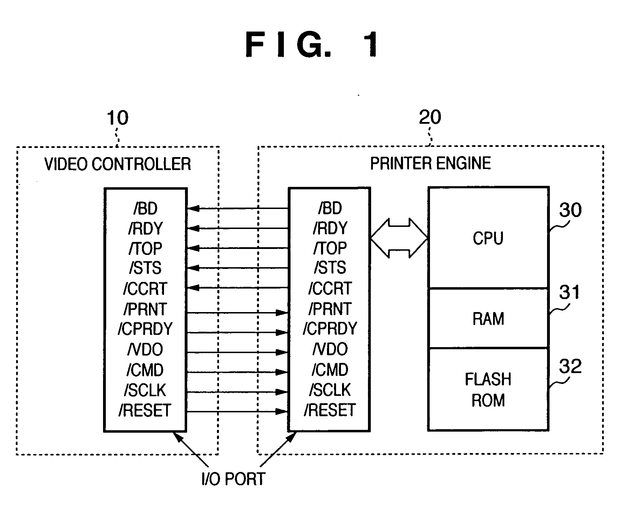

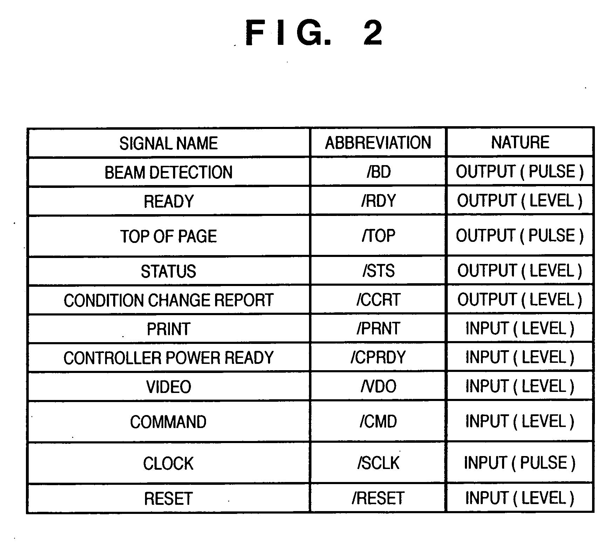

Fig. 1 is a block diagram showing an interface (to be referred to as a video interface hereinafter) that connects a video controller 10 and printer engine 20 in a printing apparatus. Fig. 2 is a table showing a list of video interface signals. Referring to Fig. 2, "output" indicates output from the printer engine 20 to the video controller 10, and "input" indicates input from the video controller 10 to the printer engine 20.

The printer engine 20 includes an engine controller (CPU 30, RAM 31, and flash ROM 32) that controls the printer engine. The engine controller exchanges signals between the printer engine 20 and the video controller 10 and controls the printer engine 20.

A beam detection (/BD) signal shown in Fig. 2 is a main-scanning horizontal sync signal in the printer engine 20. The video controller 10 sends a video (/VDO) signal corresponding to one main-scanning line in synchronism with the trailing edge of the /BD signal.

A ready (/RDY) signal indicates that the printer engine 20 is set in a printable state by a print start command (/PRNT signal is "true") from the video controller 10. Conditions that make the /RDY signal "true" are that the heat roller in the fixing unit has an appropriate temperature (a temperature that is sufficient for fixing a toner image on a paper sheet), no recording paper sheets have jammed, the polygon mirror normally rotates at a specific rotational speed, and the /BD signal is normally output at a specific period.

A top of page (/TOP) signal is a sub-scanning print sync signal in the printer engine 20. The video controller 10 sets the sub-scanning image print start position in synchronism with the trailing edge of the /TOP signal. In this example, the paper feed sensor is arranged such that the time until the printing paper sheet reaches the transfer roller after detection of the leading edge of a printing paper sheet equals the time until the latent image formed on the photosensitive body by a laser beam reaches the transfer roller as the photosensitive drum rotates. For this reason, upon detecting that the paper feed sensor signal (PFSNS) from the paper feed sensor has changed to "true", the printer engine 20 immediately sets the /TOP signal to "true" for 1 sec.

A status (/STS) signal is 16-bit serial information transmitted from the printer engine 20 to the video controller 10. This signal is called a status.

A condition change report (/CCRT) signal notifies the video controller 10 that a status in the printer, which is designated in advance, has changed.

With a print (/PRNT) signal, the video controller 10 commands the printer engine 20 to start the printing operation. In a continuous print mode, the signal means the continuation of printing operation.

A controller power ready (/CPRDY) signal indicates that power is supplied to the video controller 10, and the video controller 10 is completely initialized and is capable of transmitting/receiving a command or status to/from the printer engine 20.

The video (/VDO) signal indicates an image signal to be printed by the printer engine 20. This image signal is obtained by causing the video controller 10 to convert image code data received from the host computer into dot data.

A command (/CMD) signal is 16-bit serial information transmitted from the video controller 10 to the printer engine 20. This signal is called a command.

A clock (/SCLK) signal is a serial data sync clock used in transmitting the /CMD signal or /STS signal.

With a reset (/RESET) signal, the video controller 10 requests the printer engine 20 to initialize the printer. When this signal is LOW level for a specific time or more, the printer engine 20 initializes the engine.

Commands from the video controller 10 to the printer engine 20 and statuses from the printer engine 20 to the video controller 10, which are transmitted/received by the above-described serial communication, will be described next.

In 16-bit data transmitted/received by the serial communication, the MSB is defined as the most significant bit of the transmission/reception data, and the 15th bit from the MSB is defined as the least significant bit of the transmission/reception data.
The LSB is defined as an odd parity bit.

In the above-described data format, when a 1-word (16-bit) command is issued from the video controller 10 to the printer engine 20 in synchronism with the /SCLK signal, the printer engine 20 returns a 1-word status to the video controller 10. This command contains a status request command to check the status (state) of the printer engine 20 and an execution command that commands the printer engine 20 to execute a certain operation.

In the operation for rewriting the flash ROM, generally, rewrite data is transferred from the video controller 10 to the RAM 31 of the printer engine 20 by serial communication by using the /CMD, /STS, and /SCLK signals. The CPU 30 of the printer engine 20 rewrites the data in the flash ROM 32 by the data in the RAM 31 in accordance with a rewrite program.

In the prior art, however, when the flash ROM 32 should be rewritten, the program for the normal image forming operation in the flash ROM 32 mounted in the printer engine 20 is erased, and the program on the flash ROM to be rewritten cannot be executed in the rewrite mode. For this reason, the rewrite program must be executed by executing a program on a ROM that is not to be rewritten. Alternatively, the rewrite program must be bitmapped and executed on the RAM 31 to rewrite the flash ROM.

The capacity of the RAM 31 mounted in the printer engine 20 is generally smaller than the ROM capacity. For this reason, the entire rewrite program cannot be downloaded at once to the RAM 31 to rewrite the flash ROM. The program must be rewritten while downloading the program to the RAM 31. Hence, a special operation different from the normal image forming operation must be performed.

The time necessary for rewriting the flash ROM 32 includes the time to transfer data to be used for the rewrite to the RAM 31 of the printer engine 20 and the rewrite time by the program. The time to transfer data to be used for the rewrite to the printer engine 20 occupies the most part.

### SUMMARY OF THE INVENTION

The present invention has been made to solve the above problems, and has as its object to shorten the data transfer time in serial communication between the controller section and the engine section of an image forming apparatus.

In order to achieve the above object, according to an aspect of the present invention, there is provided a data transfer method in an image forming apparatus which comprises a nonvolatile memory and is constituted by an engine section which forms an image and a controller section which transmits image data to the engine section, comprising steps of: establishing synchronization of data transfer by a predetermined control signal of serial communication when data should be transferred from the controller section to the engine section to rewrite the nonvolatile memory; and rewriting the nonvolatile memory by the data transferred in synchronism.

According to another aspect of the present invention, there is provided an image forming apparatus which comprises a nonvolatile memory and is constituted by an engine section which forms an image and a controller section which transmits image data to the engine section, comprising: means for establishing synchronization of data transfer by a predetermined control signal of serial communication when data should be transferred from the controller section to the engine section to rewrite the nonvolatile memory; and means for rewriting the nonvolatile memory by the data transferred in synchronism.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a block diagram showing an interface that connects a video controller 10 and printer engine 20 in a printing apparatus;
Fig. 2 is a table showing a list of video interface signals;
Fig. 3 is a block diagram showing the arrangement of a printing apparatus according to an embodiment;
Fig. 4 is a sectional view showing the structure of the printing apparatus according to the embodiment;
Fig. 5 is a flow chart showing an operation for rewriting program codes stored in a flash ROM in an engine section 320;
Fig. 6 is a flow chart showing data transmission processing in a controller section 310 according to the first embodiment;
Fig. 7 is a flow chart showing flash ROM rewrite processing in the engine section 320;
Fig. 8 is a timing chart showing an image forming operation and a flash ROM rewrite operation;
Fig. 9 is a flow chart showing flash ROM rewrite processing in an engine section 320 according to the second embodiment;
Fig. 10 is a flow chart showing error detection processing by a controller section 310; and
Fig. 11 is a timing chart of serial communication between the controller section 310 and the engine section 320 when the flash ROM of the engine section 320 according to the second embodiment is to be rewritten.

### DETAILED DESCRIPTION OF THE PREFERRED EMBODIMENTS

The embodiments of the present invention will be described below in detail with reference to the accompanying drawings.

The sizes and layout of constituent elements and the flow charts of processing operations described in the embodiments do not limit the scope of the invention unless otherwise specified.

In the embodiments, a printing apparatus will be exemplified as an image forming apparatus. However, the present invention is not limited to this and can also be applied to a copying machine or facsimile apparatus that executes data transfer by serial communication between a controller section and an engine section.

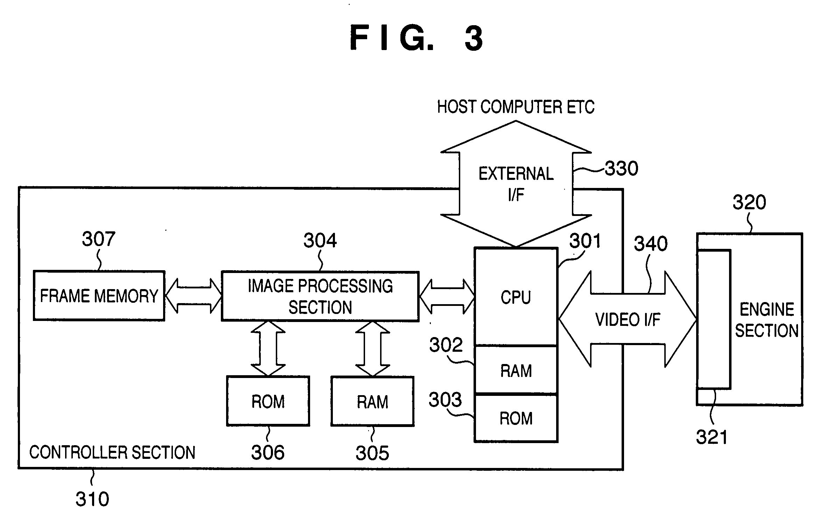

Fig. 3 is a block diagram showing the arrangement of a printing apparatus according to an embodiment. As shown in Fig. 3, the printing apparatus has a controller section 310 and an engine section 320. In the controller section 310, a CPU 301 executes a control program stored in a ROM 303 and receives image information (code data) described in a page description language (PDL) from an external device (host computer) through an external interface 330. The received image information is input to an image processing section 304. The image processing section 304 stores the image information in a RAM 305 and analyzes the image information. A RAM 302 is a memory on which a work area and registers to be used by the CPU 301 in executing processing are defined. A ROM 306 stores font data corresponding to the value of the image information.

The image processing section 304 reads out corresponding font data from the ROM 306, converts the received image information into dot video data to be printed by the engine section 320, and stores the video data in a frame memory 307. When video data of one page is stored in the frame memory 307, the CPU 301 sends a print command to the engine section 320 through a video interface 340. In addition, the CPU 301 sends the video data stored in the frame memory 307 to the engine section 320 in synchronism with the main- and sub-scanning sync signals from the engine section 320.

The engine section 320 incorporates a control section 321 constituted by a CPU or microprocessor (MPU), a RAM, and a flash ROM, like the printer engine shown in Fig. 1. The microprocessor controls the image forming process in accordance with the control program of the engine section, which is stored in the flash ROM. The control program written in the flash ROM is changed when control of the engine section 320 is changed. The rewrite of the flash ROM will be described later.

The video interface 340 that connects the controller section 310 and engine section 320 of the printing apparatus according to this embodiment is the same as the interface shown in Fig. 1. Signals exchanged between the controller section 310 and the engine section 320 are also the same as those shown in Fig. 2, and a description thereof will be omitted.

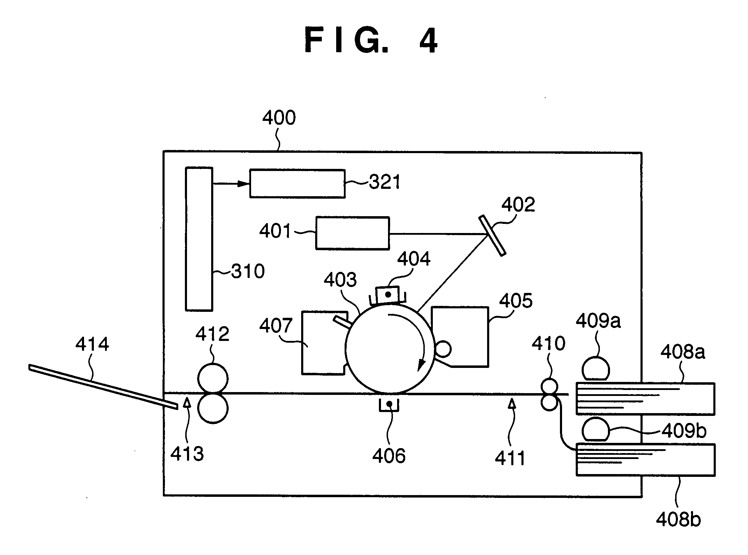

Fig. 4 is a sectional view showing the structure of the printing apparatus according to this embodiment. The same reference numerals as in Fig. 3 denote parts having the same functions in Fig. 4. A laser beam printer will be described as a printing apparatus main body 400 in this embodiment.

Referring to Fig. 4, an optical unit 401 modulates a laser beam in accordance with the video data sent through the video interface 340. A deflection mirror 402 reflects the laser beam output from the optical unit 401. The laser beam reflected by the deflection mirror 402 is scanned on a photosensitive drum 403 by a rotary polygon mirror (not shown) so that an electrostatic image is formed on the photosensitive drum 403. A charger 404 uniformly charges the photosensitive drum 403. A developer 405 develops the electrostatic image on the photosensitive drum 403 to a toner image.

A transfer charger 406 transfers the toner image on the photosensitive drum 403 to a printing paper sheet. A cleaner 407 recovers the toner remaining on the photosensitive drum 403 after transfer. An upper paper feed roller 409a feeds a printing paper sheet stored in an upper cassette 408a. A lower paper feed roller 409b feeds a printing paper sheet stored in a lower cassette 408b. Paper conveyance rollers 410 convey the fed printing paper sheet to the transfer position. A TOP sensor 411 detects the presence/absence of the fed printing paper sheet. A fixer 412 fixes the toner image transferred to the printing paper sheet on the printing paper sheet by heating and pressing. A discharge sensor 413 detects the presence/absence of a paper sheet discharged from the fixer 412. A discharge tray 414 receives the discharged printing paper sheet.

### [First Embodiment]

Procedures for rewriting control program codes (to be referred to as program codes hereinafter) stored in the flash ROM in an engine section 320 through a video interface 340 that connects a controller section 310 and the engine section 320 in the above-described printing apparatus will be described.

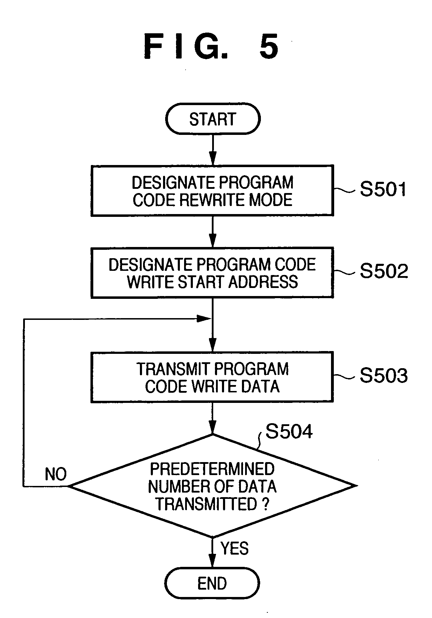

Fig. 5 is a flow chart showing an operation for rewriting program codes stored in the flash ROM in the engine section 320. First, in step S501, when a command to rewrite the program codes in the engine section 320 is input from a host computer through an external interface 330 of the controller section 310 or from the operation panel (not shown) of the controller section 310, a CPU 301 in the controller section 310 sends a command that designates a program code rewrite mode to a control section 321 of the engine section 320 through the video interface 340.

In step S502, when a status representing that the program code rewrite mode is set is received from the control section 321 of the engine section 320, the CPU 301 sends, to the control section 321, a command that designates the write start address of the flash ROM in which the program codes should actually be rewritten. In step S503, the CPU 301 of the controller section 310 transmits the program code data transmitted from the host computer to the control section 321 of the engine section 320 as a command by serial communication.

Instead of transmitting the program code data while designating one address in correspondence with one program code data in the flash ROM, a predetermined number of data are transmitted from the address designated in step S502 described above.

In step S504, it is determined whether the predetermined number of data are transmitted. If NO in step S504, the flow returns to step S503 to transmit program code data. The above-described operation is repeated until the predetermined number of data are transmitted. When it is determined that the predetermined number of data are transmitted, the program code data transmission is ended.

The above-described data transmission is done through a serial communication path (video interface 340). A /CCRT signal is used as a signal that establishes synchronization in the serial communication. In the normal image forming operation, the control section 321 in the engine section 320 notifies the controller section 310 by using the /CCRT signal that the state in the engine section 320 has changed. More specifically, if the /CCRT signal is OFF (HIGH level) at the time of data transmission, the controller section 310 determines that the engine section 320 cannot receive data, and does not execute data transmission. If the /CCRT signal is ON (LOW level), the controller section 310 determines that the engine section 320 can receive data, and executes data transmission. With this operation, synchronization of serial communication is established.

An operation will be described next, in which while the controller section 310 and engine section 320 maintain synchronization by serial communication in steps S503 and S504 in Fig. 5 described above, the controller section 310 transmits flash ROM program code write data as a command, and the control section 321 in the engine section 320 rewrites the program codes in the flash ROM by the received data.

First, details of processing for transmitting the program code data in steps S503 and S504 after the CPU 301 in the controller section 310 designates the program code rewrite mode in step S501 shown in Fig. 5 described above and designates the program code write start address in step S502. will be described. Synchronization control at the time of data transmission by the above-described /CCRT signal is the same as described above, and a description thereof will be omitted.

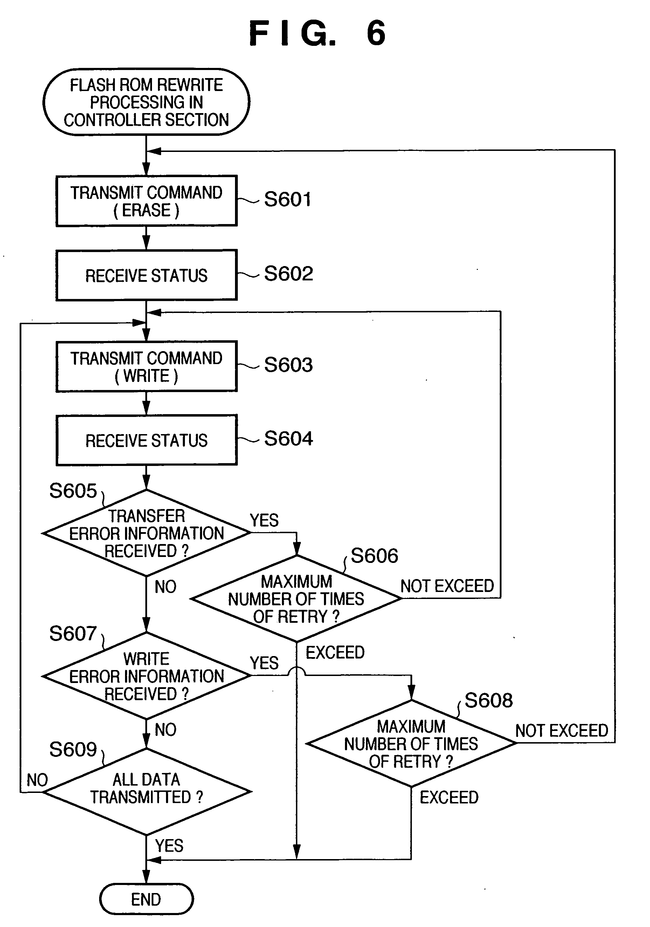

Fig. 6 is a flow chart showing data transmission processing in the controller section 310 according to the first embodiment. In step S601, the CPU 301 in the controller section 310 transmits a flash ROM erase command to the control section 321 in the engine section 320. In step S602, the CPU 301 receives a status corresponding to the erase command from the control section 321 in the engine section 320.

In step S603, the CPU 301 transmits, as a command, the data of program codes for rewriting the flash ROM. In step S604, the CPU 301 receives a status corresponding to the command. In steps S605 to S608, error recovery processing is executed on the basis of error information recorded in the received status.

If transfer error information is received in step S605, the flow advances to step S606 to execute command resending processing. If the number of times of transfer error information reception does not exceed a predetermined number of times of retry, the flow returns to step S603 to resend the command. If the number of times of retry exceeds the predetermined number, the processing is ended.

If write error information is received in step S607, the flow advances to step S608. If the number of times of reception does not exceed a predetermined number of times of retry, the flow returns to step S601 to execute processing for transmitting the write data again. If the number of times of reception exceeds the predetermined number of times of retry, the processing is ended.

In step S609, it is determined whether the write data corresponding to a predetermined number of data are transmitted as commands. If NO in step S609, the flow returns to step S603 to repeat the above-described processing until all data are transmitted.

Processing will be described next, in which the control section 321 in the engine section 320 rewrites the flash ROM while establishing synchronization of serial communication with respect to the controller section 310 without storing, in the RAM, the program codes of the flash ROM, which are sent from the controller section 310 by serial communication.

This processing is flash ROM rewrite processing which is executed by the control section 321 in the engine section 320 in correspondence with the above-described data transmission processing by the controller section 310 shown in Fig. 6 described above. The above-described /CCRT signal is ON (LOW level) in the initial state. When a command that designates the program code rewrite mode is received from the controller section 310, the /CCRT signal controls reception of addresses and data while executing the above-described synchronization processing.

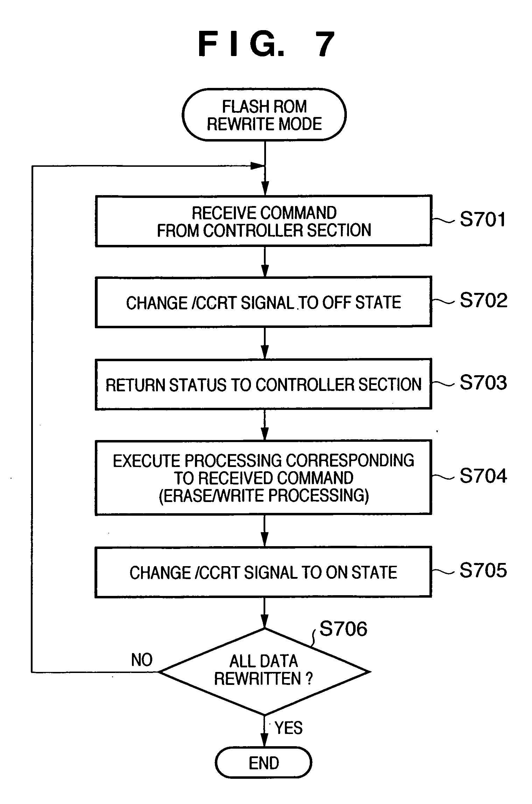

Fig. 7 is a flow chart showing flash ROM rewrite processing in the engine section 320. In step S701, the control section 321 in the engine section 320 receives the data of program codes sent from the controller section 310 as a command by serial communication. In step S702, the above-described /CCRT signal is changed to the OFF state (HIGH level) to notify the controller section that the control section is not ready for reception of the next command. In step S703, a status is returned to the controller section 310. In step S704, program code data erase or write processing is executed in accordance with the command received in step S701 described above.

In the first embodiment, error information of a transfer error or write error is recorded in a status and returned.

In step S705, the /CCRT signal is changed to the ON state (LOW level) to notify the controller section 310 that the control section 321 is ready for reception of the next command in serial communication. It is determined whether write data corresponding to a predetermined number of data are received. If NO in step S706, the flow returns to step S701 to repeat the above-described processing until all data are received.

As described above, when the /CCRT signal is used for synchronization control, the controller section 310 can determine that the engine section 320 can reliably receive a command. For this reason, the wait time until the next serial communication can be shortened.

Hence, the communication speed in transferring the codes of the control program of the flash ROM can be increased.

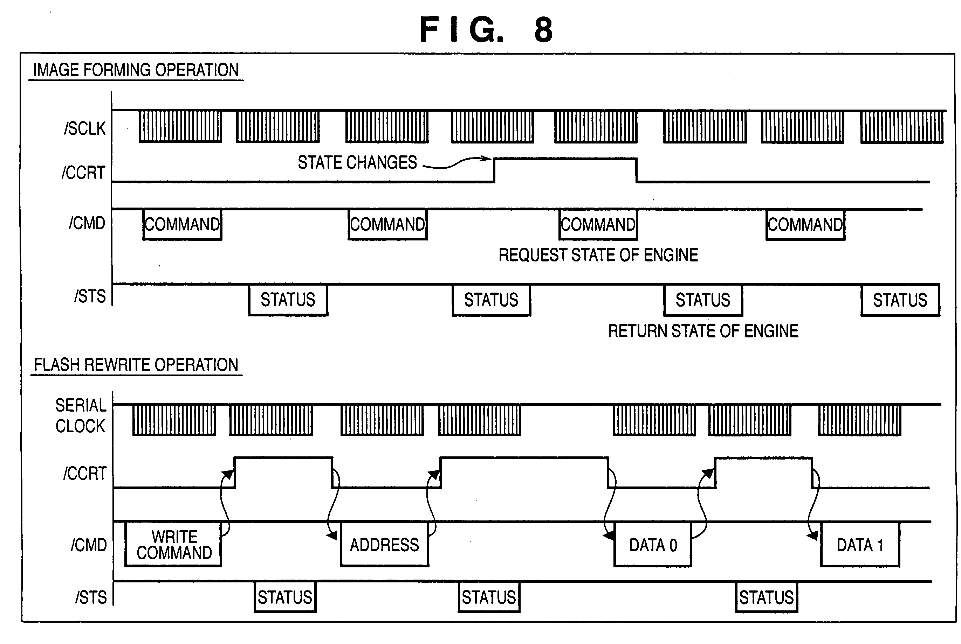

Fig. 8 is a timing chart showing an image forming operation and a flash ROM rewrite operation. Fig. 8 shows the timing chart of command/status transmission/reception by serial communication and the /CCRT signal in the two operations. A status of the engine section 320 is returned in correspondence with a command from the controller section 310.

As shown in Fig. 8, in the normal image forming operation, when the internal state of the engine section 320 changes, the above-described /CCRT signal changes to the OFF state (HIGH level). The controller section 310 that has received the /CCRT signal in the OFF state transmits a command that requests the state of the engine section 320. The control section 321 in the engine section 320 records the state of the engine section 320, which corresponds to the request command, in the status and returns the status.

In the flash ROM write operation, the control section 321 in the engine section 320 uses the /CCRT signal as serial communication data reception preparation completion notification signal from the controller section 310. When the /CCRT signal changes from the OFF state to the ON state, the controller section 310 sends a command. The engine section 320 receives predetermined program code data as a command and writes the data in the flash ROM.

### [Second Embodiment]

The second embodiment of the present invention will be described next in detail with reference to the accompanying drawings.

In the above-described first embodiment, the controller section 310 acquires error information of a transfer error or write error as a status from the engine section 320. In the second embodiment, the above-described /CCRT signal is used even for error detection.

The arrangement of a printing apparatus according to the second embodiment is the same as that of the first embodiment shown in Figs. 3 and 4, and a description thereof will be omitted.

In addition, processing in steps S501 and S502 shown in Fig. 5, in which control program codes (to be referred to as program codes hereinafter) stored in the flash ROM in an engine section 320 are rewritten through a video interface 340 that connects a controller section 310 and the engine section 320, is the same as in the first embodiment, and a description thereof will be omitted. Furthermore, as in the first embodiment, the /CCRT signal is used as a signal that controls synchronization of serial communication.

Processing as a characteristic feature of the second embodiment will be described here, in which instead of causing the engine section 320 to returning a status in correspondence with a command transmitted from the controller section 310 to the engine section 320, the /CCRT signal used for synchronization control of serial communication is caused to function as error information to be sent to the controller section 310.

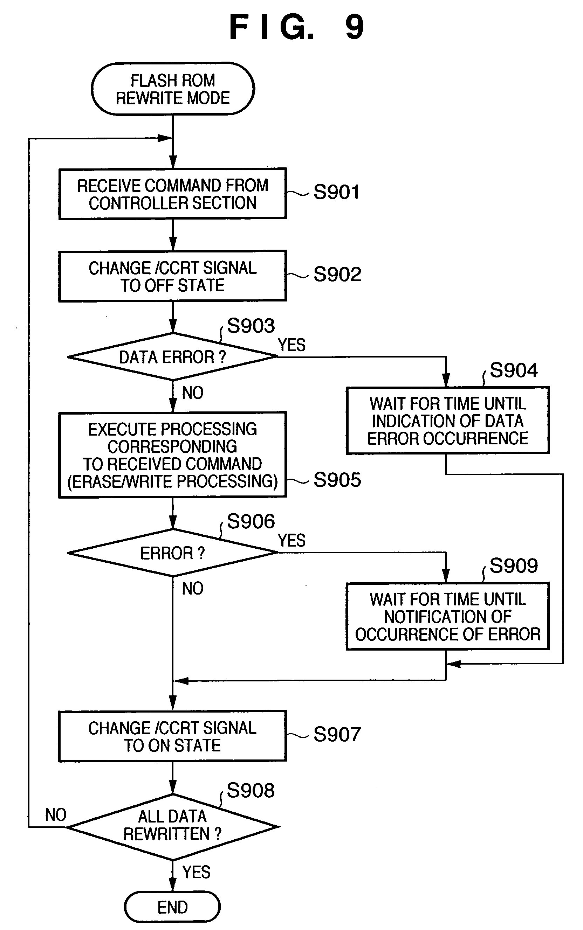

Fig. 9 is a flow chart showing flash ROM rewrite processing in the engine section 320. In step S901, a control section 321 in the engine section 320 receives the data of program codes sent from the controller section 310 as a command by serial communication. In step S902, the above-described /CCRT signal is changed to the OFF state (HIGH level) to notify the controller section that the data is received, and the control section is not ready for reception of the next data.
In step S903, it is determined by normal parity check whether the received command has a data error. If YES in step S903, the flow advances to step S904. The processing waits for a time until the controller section 310 detects the communication error. When the time has elapsed, the flow advances to step S907.

If NO in step S903, the flow advances to step S905 to execute program code data erase or write processing in accordance with the command received in step S901 described above. In step S906, it is determined whether an erase or write error has occurred in step S905. If YES in step S906, the flow advances to step S909. The processing waits for a time until the controller section 310 detects the occurrence of the error. When the time has elapsed, the flow advances to step S907. If NO in step S906, the flow advances to step S907 to change the /CCRT signal to the ON state (LOW level) to notify the controller section 310 that the control section 321 is ready for reception of the next command. It is determined in step S908 whether rewrite data corresponding to a predetermined number of data are received. If NO in step S908, the flow returns to step S901 to repeat the above-described processing until all data are received.

As described above, when the /CCRT signal is used as a sync signal of serial communication, the processing for causing the engine section 320 to return a status in correspondence with a command from the controller section 310 can be omitted. For this reason, as compared to data transfer by only normal serial communication, the data communication amount can be reduced, and data can be transferred at a high speed.

Processing will be described next, in which when flash ROM rewrite data is transmitted from the controller section 310 to the engine section 320, an error that has occurred in the engine section 320 is detected by using the /CCRT signal. In the second embodiment, in the flash ROM rewrite mode, the controller section 310 detects whether the processing for causing the engine section 320 to rewrite the program is being normally executed by monitoring the change time of the /CCRT signal.

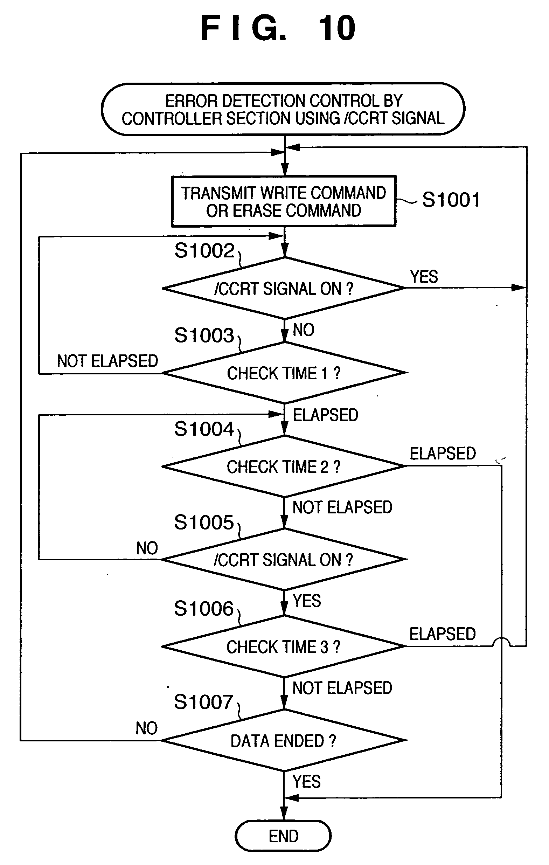

Fig. 10 is a flow chart showing error detection processing by the controller section 310. In step S1001, a CPU 301 in the controller section transmits a command to the control section 321 in the engine section 320. In steps S1002 and S1003, the controller section waits until the /CCRT signal from the control section 321 in the engine section 320 changes to the ON state (LOW level) within specified time 1. The time necessary for the flash ROM erase/rewrite in the engine section 320 is specified by each flash ROM. The specified time 1 is the sum of the time necessary for data transmission/reception and the minimum time necessary for the flash ROM erase/rewrite operation in the flash ROM erase/rewrite mode.

When the control section 321 in the engine section 320 changes the /CCRT signal to the ON state within the specified time 1, the controller section 310 determines that a data error has occurred in command transmission. The flow returns to step S1001 to retransmit the same command. If the /CCRT signal does not change to the ON state even when the specified time 1 has elapsed in step S1003, the flow advances to step S1004. In steps S1004 and S1005, the controller section waits until the /CCRT signal changes to the ON state within specified time 2 that is the maximum wait time for monitoring the change of the /CCRT signal. If the /CCRT signal does not change to the ON state even when the specified time 2 has elapsed, it is determined that the control of the engine section 320 is not correctly executed, and the processing is ended.

If the /CCRT signal changes to the ON state within the specified time 2 in step S1005, the flow advances to step S1006 to check whether specified time 3 which is the sum of the time necessary for data transmission/reception and the maximum time necessary for the flash ROM erase/rewrite operation has not elapsed yet. If the specified time 3 has elapsed, it is determined in the flash ROM erase/write operation that the flash ROM erase/write has failed or in the operation for receiving a control command, data, or address that a data error has occurred in command transmission. The flow returns to step S1001 to retransmit the same command. If the specified time 3 has not elapsed yet, it is determined that data transfer and command processing have normally ended. The flow advances to step S1007 to check whether all commands are transmitted. If NO in step S1007, the flow returns to step S1001 to repeat the above-described processing for transmitting the next command.

As described above, the controller section 310 can detect a data communication error or data processing error that has occurred in the engine section 320 by using the /CCRT signal.

The specified time in which the controller section 310 monitors the /CCRT signal may be changed depending on the size of data to be written in the flash ROM, the size of the block to be erased, or whether transfer of rewrite data is progressing.

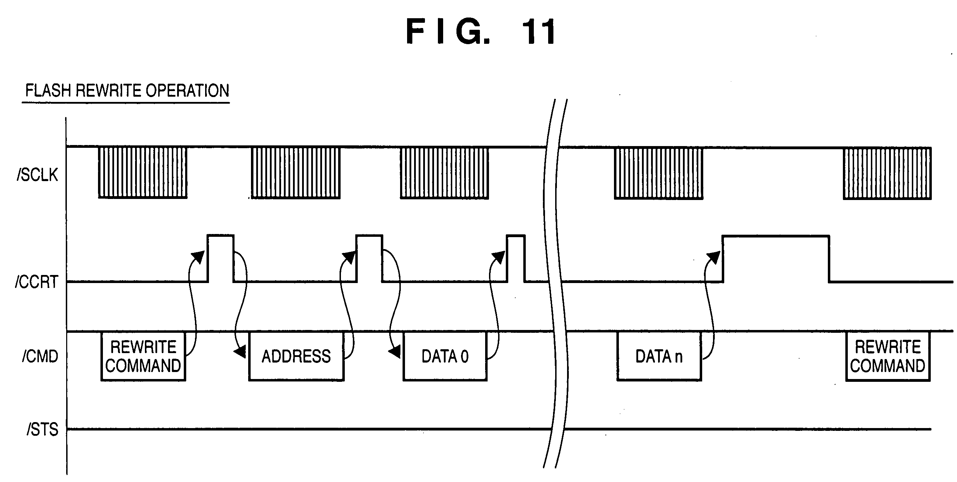

Fig. 11 is a timing chart of serial communication between the controller section 310 and the engine section 320 when the flash ROM of the engine section 320 according to the second embodiment is to be rewritten.

As described above, according to the embodiment, when program code data is transferred from the controller section 310 to the engine section 320 to rewrite the flash ROM (nonvolatile memory) of the control section 321 in the engine section 320, processing related to rewrite data transfer in serial communication can be simplified, and the rewrite of the nonvolatile memory can be executed at a high speed.

### [Other Embodiment]

The present invention may be applied to a system constituted by a plurality of devices (e.g., a host computer, an interface device, a reader, a printer, and the like) or an apparatus comprising a single device (e.g., a copying machine, a facsimile apparatus, or the like).

The object of the present invention is achieved even by supplying a recording medium which records software program codes for implementing the functions of the above-described embodiments to the system or apparatus and causing the computer (or a CPU or MPU) of the system or apparatus to read out and execute the program codes stored in the recording medium.

In this case, the program codes read out from the recording medium implement the functions of the above-described embodiments by themselves, and the recording medium which stores the program codes constitutes the present invention.

As the recording medium for supplying the program codes, for example, a floppy disk (registered trademark), hard disk, optical disk, magnetooptical disk, CD-ROM, CD-R, magnetic tape, nonvolatile memory card, ROM, or the like can be used.

The functions of the above-described embodiments are implemented not only when the readout program codes are executed by the computer but also when the operating system (OS) running on the computer performs part or all of actual processing on the basis of the instructions of the program codes.

The functions of the above-described embodiments are also implemented when the program codes read out from the recording medium are written in the memory of a function expansion board inserted into the computer or a function expansion unit connected to the computer, and the CPU of the function expansion board or function expansion unit performs part or all of actual processing on the basis of the instructions of the program codes.

As described above, according to the embodiments, the data transfer time in serial communication between the controller section and the engine section of the image forming apparatus can be shortened.

The present invention is not limited to the above embodiments and various changes and modifications can be made within the spirit and scope of the present invention. Therefore, to apprise the public of the scope of the present invention, the following claims are made.

In an image forming apparatus which includes a nonvolatile memory and is constituted by an engine section which forms an image and a controller section which transmits image data to the engine section through a video interface, synchronization of data transfer is established by a predetermined control signal that controls serial communication when data should be transferred from the controller section to the engine section to rewrite the nonvolatile memory, and the nonvolatile memory is rewritten by the data transferred in synchronism.

## Claims

1. A data transfer method in an image forming apparatus which comprises a nonvolatile memory and is constituted by an engine section which forms an image and a controller section which transmits image data to the engine section, comprising steps of:
establishing synchronization of data transfer by a predetermined control signal of serial communication when data should be transferred from the controller section to the engine section to rewrite the nonvolatile memory; and
rewriting the nonvolatile memory by the data transferred in synchronism.

2. The method according to claim 1, wherein the control signal is used as a predetermined signal in an image forming operation and as a sync signal in rewriting the nonvolatile memory.

3. The method according to claim 1, wherein the engine section controls the control signal to notify the controller section of a state of the engine section.

4. The method according to claim 3, wherein the state of the engine section is one of a data transfer error, an erase or rewrite operation result of the nonvolatile memory, and an end of the rewrite operation of the nonvolatile memory.

5. The method according to claim 1, wherein the engine section controls the control signal to an OFF state in accordance with data reception from the controller section and to an ON state when preparation for next data reception is ended.

6. The method according to claim 1, wherein the controller section monitors a change of the control signal to an ON state for a predetermined time to detect a state of the engine section.

7. The method according to claim 6, wherein the predetermined time changes depending on at least a size of the data to be transferred and a block size of the nonvolatile memory to be erased.

8. The method according to claim 1, wherein the data is a control program code data.

9. The method according to claim 1, wherein the control signal is a signal that indicates a state change of the engine section.

10. The method according to claim 1, wherein the nonvolatile memory is a flash memory.

11. An image forming apparatus which comprises a nonvolatile memory and is constituted by an engine section which forms an image and a controller section which transmits image data to the engine section, comprising:
means for establishing synchronization of data transfer by a predetermined control signal of serial communication when data should be transferred from the controller section to the engine section to rewrite the nonvolatile memory; and
means for rewriting the nonvolatile memory by the data transferred in synchronism.

12. A controller section which transmits image data to an engine section which comprises a nonvolatile memory and forms an image, comprising:
interface means for interfacing with the engine section; and
mode designation data transmission means for transmitting mode designation data which designates a mode for rewriting the nonvolatile memory of the engine section.
